# FASCICULE DE BREVET EUROPEEN

(11) **EP 1 343 666 B1**
(45) Date de publication et mention de la délivrance du brevet: **10.11.2004**
(21) Numéro de dépôt: 01991885.3
(22) Date de dépôt: 20.12.2001
(51) Int. Cl.: B60S 1/08

(54) **PROCEDE DE COMMANDE D'UN MOTEUR D'ESSUYAGE**
VERFAHREN ZUR STEUERUNG EINES WISCHERMOTORS
METHOD FOR CONTROLLING A WIPER MOTOR

(30) Priorité: 21.12.2000 FR 0017361
(43) Date de publication de la demande: 17.09.2003
(73) Titulaire: VALEO SYSTEMES D'ESSUYAGE, 78321 La Verrière (FR)
(72) Inventeur: HOSPITAL, Eric, F-86100 Chatellerault (FR); JACKSON, James, F-75014 Paris (FR)
(86) Numéro de dépôt international: PCT/FR2001/004139
(87) Numéro de publication internationale: WO 2002/049890

(56) Documents cités:
- EP-A- 1 034 991
- DE-A- 19 741 630
- US-A- 4 934 014
- US-A- 5 892 343
- US-A- 6 140 785

## Description

L'invention concerne un procédé de commande d'un moteur d'essuyage qui appartient à un dispositif d'essuyage pour une vitre d'un véhicule automobile.

L'invention concerne aussi un contrôleur qui met en oeuvre lé procédé de l'invention et un dispositif d'essuyage pour une vitre d'un véhicule automobile.

La quasi-totalité des véhicules automobiles sont équipés de dispositifs d'essuyage comportant au moins un élément d'essuyage tel qu'un balai d'essuie-glace. L'élément d'essuyage permet, par un mouvement de balayage alterné, rotatif ou linéaire, d'essuyer une zone d'une vitre d'un véhicule sous l'effet d'un moteur électrique à courant continu alimenté par la batterie sur commande du conducteur, d'un ordinateur de bord ou autre automate.

Dans un premier état de la technique, la détection des extrémités de la course de balayage n'était pas nécessaire parce qu'elles dépendaient d'un mécanisme de transformation, généralement de type bielle-manivelle qui n'avait pas besoin d'une information de position.

Dans un second état de la technique, le besoin de contrôler la course du balai est apparu quand on a voulu disposer un contrôleur électronique entre la commande par le conducteur ou l'automate et le moteur électrique et on sait aujourd'hui détecter la position instantanée du balai d'essuyage ou son accostage sur des butées d'essuyage. Dans une certaine mesure, on sait aussi détecter la position instantanée du balai dans sa course et, . en fonction de commandes préenregistrées, commander le mouvement alternatif en contrôlant l'alimentation électrique du moteur électrique d'essuyage qui produit le mouvement du balai.

Malheureusement, de nombreuses situations se rencontrent lors de l'utilisation du véhicule automobile sur lequel est installé le dispositif d'essuyage dans lesquelles le contrôleur ne se trouvé plus dans un état de commande qui corresponde à la situation réelle. C'est le cas des variations de performances ou de caractéristiques introduites par les jeux mécaniques ou l'usure, l'interposition d'obstacles sur la vitre ou dans la chaîne cinématique qui transmet l'énergie mécanique du moteur au balai d'essuyage, et d'autres encore, comme le déplacement intentionnel à la main du balai d'essuyage dans son trajet d'essuyage.

Dans un autre état de la technique, on a proposé des moyens pour résoudre certains des problèmes survenant lors de ces situations réelles. Mais, ou bien il est nécessaire de réétalonner le système, ou bien le dispositif d'essuyage devient indisponible ce qui est inacceptable dans un point de vue de sécurité.

Un autre état de la technique (US-A-6140785) montre un procédé de commande d'un moteur d'essuyage équipant un dispositif d'essuyage pour entraîner un balai d'essuyage se déplaçant sur une vitre selon un trajet alternatif entre une première et une seconde positions de fin de course, qui consiste lors d'une première étape d'initialisation,
* à détecter des première et seconde butées de fin de course telles que déterminées par construction du dispositif d'essuyage associé, puis
* à déterminer à partir de ces première et seconde butées de fin de course des butées logicielles sur lesquelles le balai change de sens de balayage en fonctionnement normal.

L'invention a pour but de remédier à ces inconvénients et de proposer un dispositif d'essuyage standard et simple à installer, ainsi qu'un procédé d'initialisation automatique de son système de commande.

Dans ce but, l'invention propose un procédé de commande d'un moteur d'essuyage équipant un dispositif d'essuyage pour entraîner au moins un balai d'essuyage se déplaçant sur une vitre selon un trajet alternatif entre une première et une seconde positions de fin de course. Le procédé de commande est caractérisé en ce qu'il consiste :
lors d'une première étape d'initialisation,
   ◆ à détecter des première et seconde butées de fin. de course telles que déterminées par construction du dispositif d'essuyage associé, puis
   ◆ à déterminer à partir de ces première et seconde butées de fin de course des première et seconde zones de test de fin de course et dans chacune des zones de test la position d'une butée logicielle sur laquelle le balai change de sens de balayage en fonctionnement normal ;
lors d'une étape de fonctionnement normal :
   ◆ à détecter la position du balai d'essuyage relativement aux première et seconde zones de test de fin de course, pour déterminer le changement de sens du balayage et
   ◆ à réaliser lors d'au moins un passage du balai d'essuyage dans une zone de test une variation de la position de sa butée logicielle de fin de course,
de sorte que soit réalisée une auto-adaptation des limites de balayage au cours du temps en fonction des usures mécaniques, jeux et autres accidents.

Selon un autre aspect de l'invention, lors de l'étape de fonctionnement normal, la situation de chaque zone de test de fin de course est calculée en fonction de la détection de l'accostage de butées de fin de course physique.

Selon un autre aspect de l'invention, une première limite de chaque zone de fin de course est déterminée sur la base de la détection de l'accostage d'une butée de fin de course et par une seconde limite disposée à une distance prédéterminée de la première limite.

Selon un autre aspect de l'invention, la variation de la position de chaque butée logicielle est effectuée par incrémentation d'un pas positif ou négatif de façon à ce que la butée logicielle reste dans sa zone de test.

Selon un autre aspect de l'invention, lors du fonctionnement normal, le procédé de commande consiste aussi à détecter la présence d'un obstacle sur le trajet alternatif du balai d'essuyage en dehors d'une zone de test, lorsqu'il provient d'une zone de test de fin de course, puis à déterminer un arrêt du balayage.

Selon un autre aspect de l'invention, lors du fonctionnement normal, le procédé de commande consiste aussi à commander un retour en arrière du balai d'essuyage d'une distance prédéterminée, puis un arrêt d'une durée prédéterminée, et enfin un retour vers la position de l'obstacle, au moins un nombre prédéterminé de fois.

Selon un autre aspect de l'invention, lors du fonctionnement normal, le procédé de commande consiste aussi à commander, depuis la position d'arrêt de détection d'obstacle un retour en arrière du balai d'essuyage vers la zone de test de fin dé course d'où le balai provient.

Selon un autre aspect de l'invention, lors du fonctionnement normal, le procédé de commande consiste aussi à commander ensuite une étape d'initialisation, de sorte que l'obstacle disposé sur le trajet du balai d'essuyage soit considéré comme une butée de fin de course physique et à permettre un balayage en étape de fonctionnement normal selon une amplitude dégradée.

Selon un autre aspect de l'invention, lors du fonctionnement normal, le procédé de commande consiste aussi à détecter la présence d'un obstacle dans une zone de test de fin de course, puis à produire une commande d'arrêt du balayage, puis un retour en sens contraire du balayage.

Selon un autre aspect de l'invention, le procédé de commande consiste aussi à incrémenter un compteur de détections d'obstacle dans une zone de test de fin de course, puis à détecter quand le compteur atteint une valeur prédéterminée, puis à exécuter à nouveau une première étape d'initialisation.

L'invention concerne aussi un contrôleur d'essuyage pour mettre en oeuvre le procédé de commande défini ci-dessus. Le contrôleur d'essuyage comporte :
- un moyen pour déterminer une zone de test de fin de course à une première extrémité du balayage dont l'entrée est connecté à un moyen pour détecter l'accostage du balai d'essuyage sur une butée de fin de course physique ;
- un moyen pour déterminer une zone de test de fin de course à une seconde extrémité du balayage dont l'entrée est connecté à un moyen pour détecter l'accostage du balai d'essuyage sur une butée de fin de course physique ;
- un moyen pour déterminer la position d'une butée de fin de course dans chaque zone de fin de test ;
- un moyen pour commander le mouvement d'un moteur d'essuyage ;
de sorte que le sens du balayage est inversé lors de chaque accostage d'une butée de fin de course logicielle et de sorte que la position de chaque butée logicielle soit variée, à la fin d'un balayage déterminé, pour que la butée de fin de course logicielle reste à l'intérieur de sa zone de test.

Selon un autre aspect de l'invention, le contrôleur comporte aussi un moyen pour détecter la présence d'un obstacle en dehors d'une zone de test de fin de course, dont le signal de sortie est transmis à l'entrée d'activation d'un générateur qui comporte, séparément ou en combinaison : un moyen de commande d'un retour en arrière du balai d'essuyage d'une distance prédéterminée, un moyen de commande d'un retour en arrière du balai d'essuyage jusqu'à la précédente butée de fin de course logicielle, un moyen produisant un temps d'arrêt d'une durée prédéterminée, puis un retour vers la position détectée de l'obstacle, un compteur du nombre de détections d'un obstacle depuis une position d'arrêt intermédiaire produisant un signal de sortie actif quand le nombre de détections dépasse une valeur prédéterminée, de sorte que le moyen de commande d'un retour en arrière du balai d'essuyage jusqu'à la précédente butée de fin de course logicielle soit activé, le compteur étant alors réinitialisé, un compteur du nombre de détections d'un obstacle depuis une zone de test de fin de course, produisant un signal de sortie actif quand le nombre de détections dépasse une valeur prédéterminée, de sorte que l'un au moins des moyens pour déterminer une zone de test de fin de course et une butée de fin de course logicielle soit activé en prenant la position de l'obstacle comme butée de fin de course.

Selon un autre aspect de l'invention, le contrôleur comporte aussi un moyen pour détecter la présence d'un obstacle dans une zone de test de fin de course, dont le signal de sortie est transmis à l'entrée d'activation d'un générateur qui commande un retour en arrière vers la zone de test de fin de course opposée.

Selon un autre aspect de l'invention, le contrôleur comporte aussi un moyen pour compter le nombre de balayages au cours duquel un obstacle a été rencontré, puis lorsqu'un nombre prédéterminé de balayages a été atteint, à recalculer la situation de la zone de test de fin de course dans laquelle un obstacle a été détecté.

L'invention concerne aussi un dispositif d'essuyage incorporant un contrôleur d'essuyage défini ci-dessus. Le dispositif d'essuyage comporte un moteur d'essuyage alimenté sous la commande d'un dispositif de commande pour détecter une commande de marche/arrêt d'un utilisateur ou d'un ordinateur de bord, connecté audit contrôleur d'essuyage, qui reçoit aussi des signaux représentatifs des fins de course physiques droite et gauche ainsi que de la position relative et de la détection d'obstacle générés par un moyen de détection en relation avec l'arbre de sortie du moteur d'essuyage, mécaniquement connectée à un réducteur et à un dispositif de conversion du mouvement de rotation de l'arbre de sortie du réducteur en un mouvement de balayage appliqué à au moins un balai d'essuyage.

D'autres caractéristiques et avantages de l'invention apparaîtront à la lecture de la description détaillée qui suit pour la compréhension de laquelle on se reportera aux dessins annexés parmi lesquels :
- les figures 1a à 1d représentent schématiquement divers dispositions du trajet alternatif lors du réglage de première mise en service d'un dispositif de balayage selon l'invention ;
- les figures 2a à 2e représentent schématiquement divers dispositions du trajet alternatif lors d'un fonctionnement normal;
- la figure 3 représente un schéma bloc d'un dispositif d'essuyage incorporant le dispositif de commande selon l'invention ;
- les figures 4a à 4c représentent schématiquement diverses dispositions du trajet alternatif lors d'un fonctionnement au cours duquel un obstacle est rencontré ;
- les figures 5a et 5b représentent schématiquement des dispositions du trajet alternatif lors d'un fonctionnement au cours duquel un obstacle est rencontré dans une zone de test de fin de course ;
- les figures 6, 7a et 7b représentent des organigrammes expliquant le procédé de commande selon l'invention ;
- la figure 8 représente un schéma bloc d'un contrôleur mettant en oeuvre le procédé de commande de l'invention ;
- la figure 9 représente un autre organigramme expliquant le procédé de commande selon l'invention.

L'invention s'applique de façon similaire, que le dispositif d'essuyage fonctionne selon un balayage linéaire ou selon un balayage oscillant.

On décrira un système à un seul balai d'essuyage bien que l'invention s'applique aussi à des dispositifs d'essuyage à plusieurs balais d'essuyage.

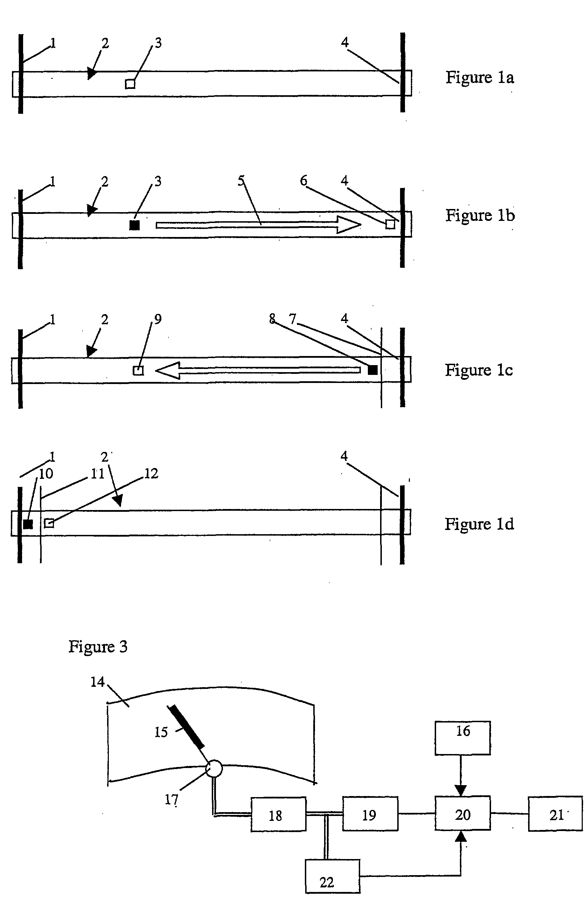

Aux figures 1A à 1 D, on a représenté schématiquement diverses dispositions du trajet alternatif du balai d'essuyage lors du réglage de première mise en service d'un dispositif de balayage selon l'invention.

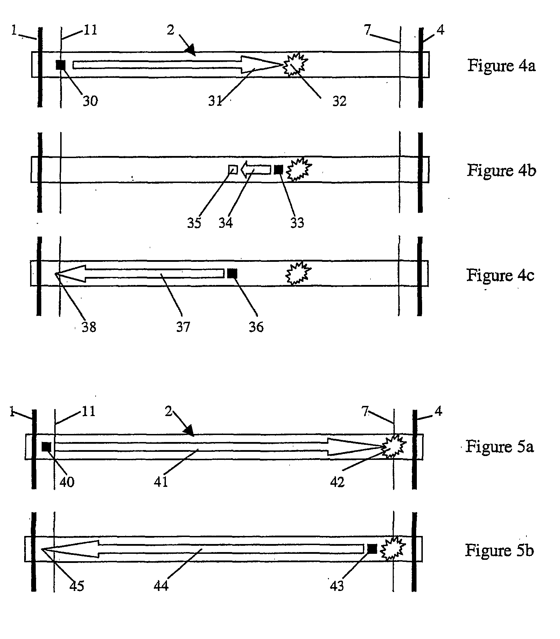

Le dispositif d'essuyage de l'invention tel qu'il est représenté à la figure 3, comporte essentiellement un moteur d'essuyage 19 connecté à un réducteur 18. dont l'arbre de sortie est lui-même, connecté à un dispositif 17 de conversion du mouvement de rotation de l'arbre de sortie du réducteur en un mouvement de balayage appliqué au balai d'essuyage 15 sur la vitre 14.

Le dispositif d'essuyage de l'invention comporte aussi des moyens 22 pour engendrer un signal représentatif de l'accostage du balai à des positions extrêmes de balayage ainsi que des moyens pour engendrer un signal représentatif de la position relative du balai par rapport à un point de référence sur le trajet de balayage.

A la figure 1A, la situation d'accostage de fin de course, représentée à droite par la référence 4 et à gauche par la référence 1, peut être détectée à l'aide de butées de fin de course disposées en relation avec un organe tournant du moteur, du réducteur ou encore du dispositif de conversion du mouvement de rotation du réducteur en balayage alternatif par le balai.

On a aussi représenté la piste ou trajet suivi par le balai sur la vitre lors de son fonctionnement en essuyage. Cette piste représentée aux figures 1A à 1D par la référence 2, représente aussi dans un mode de réalisation de l'invention, un moyen pour produire un signal représentatif de la position instantanée relative du balai d'essuyage dans sa trajectoire relativement à un point de référence ainsi qu'il apparaîtra dans la suite de la description.

Lors de la mise en service du véhicule ou lors de phases de reconfiguration qui seront décrites ultérieurement, le dispositif d'essuyage de l'invention peut voir son balai d'essuyage disposé en une position 3 relative à la butée de fin de courses physique 1 ou 4, aléatoire sur le trajet ou piste 2 ainsi qu'il est visible à la figure 1A.

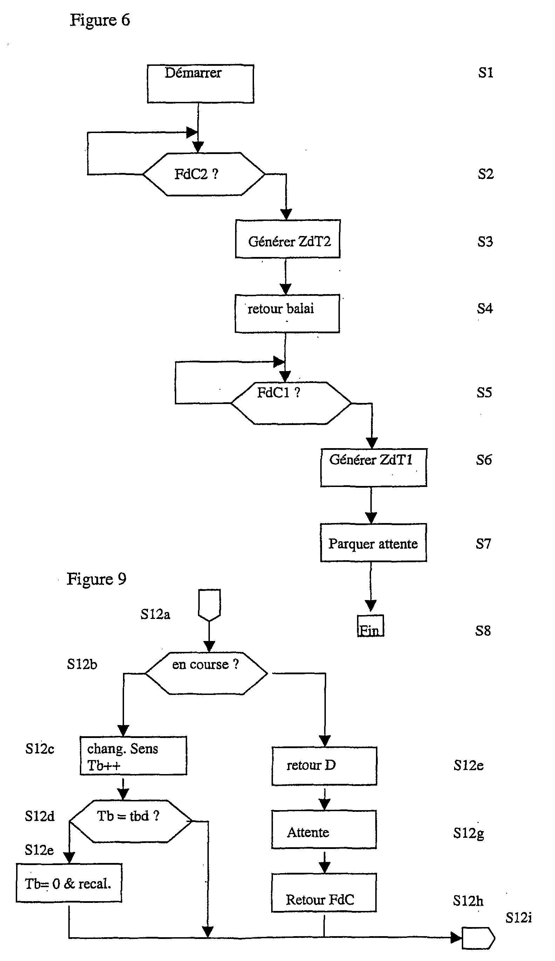

A la figure 6, on a représenté l'organigramme expliquant la partie de configuration du procédé de commande selon l'invention, et on décrit la figure 6 en relation avec les figures 1A à 1D.

Au début du procédé de configuration du dispositif d'essuyage, lors d'une étape S1, le contrôleur 20 (figure 3) produit un signal de mise en marche au moteur du dispositif d'essuyage pour la configuration du dispositif d'essuyage de sorte que le balai d'essuyage parte de la position 3 de la figure 1A vers la butée de fin de course physique représentée à droite 4 aux figures 1A et 1B.

Lors de ce trajet 5 (figure 1B), le balai d'essuyage 14 (figure 3) parcourt la vitre 14 (figure 3) de sorte qu'il atteigne la position 6 en situation de butée de fin de course physique 4 (figure 1B).

En revenant à la figure 6, lors du trajet 5 de la figure 1B, selon le procédé de l'invention, la détection de la butée de fin de course de droite ("FdC2") est effectuée par un test S2 qui réalise la comparaison de la position relative 6 du balai d'essuyage 15 (figure 3) à la référence FdC2 de la butée de fin de course physique 4, à droite.

Lorsque le test S2 est positif, le procédé de l'invention passe dans une étape S3 au cours de laquelle le contrôleur 20 (figure 3) génère sur des moyens mémoire des variables définissant une zone de test ZdT2 dite seconde zone de test de fin de course. A cette fin, le procédé de l'invention consiste à commander un retour du balai d'essuyage en revenant vers la gauche (voir figure 1C) jusque dans une position 8 qui borde la limite à gauche (7) à la figure 1 C de la seconde zone de test ZdT2.

Lors d'une étape S4, le contrôleur 20 (figure 3) produit un signal de commande de retour du balai d'essuyage qui revient dans une position 9 vers l'autre butée de fin de course physique 1 en référence à la figure 1C.

En revenant à la figure 6, lors du trajet 9 de la figure 1c, selon le procédé de l'invention, la détection de la butée de fin de course de gauche ("FdC1") est effectuée par un test S5 qui réalise la comparaison de la position relative 10 du balai d'essuyage 15 (figure 3) à la référence FdC1 de la butée de fin de course physique 1, à gauche.

Lorsque le test S5 est positif, le procédé de l'invention passe dans une étape S6 au cours de laquelle le contrôleur 20 (figure 3) génère sur des moyens mémoire des variables définissant une zone de test ZdT1 dite première zone de test de fin de course. A cette fin, le procédé de l'invention consiste à commander un retour du balai d'essuyage en revenant vers la droite (voir figure 1D) jusque dans une position 12 qui borde la limite à droite 11 à la figure 1D de la zone de test ZdT1,

Le balai d'essuyage est enfin disposé dans une position 12 de parcage lors d'une étape S7 (figure 6) et le procédé de commande de l'invention, dans sa phase de configuration est arrêté tant qu'un ordre de mise en marche du dispositif d'essuyage n'est pas effectué.

On dispose ainsi aux extrémités du trajet d'essuyage, et dans le cas d'un système d'essuyage à plusieurs balais, pour chaque balai d'essuyage, de deux zones de test de fin de course ZdT1 et ZdT2 qui sont seulement limitée d'un seul côté par les butées de fin de course physique imposées par la construction du système d'essuyage.

Enfin le balai d'essuyage est parqué, avant l'utilisation normale du véhicule, dans une position d'attente strictement déterminée par rapport à ces deux zones de test.

Lors d'un fonctionnement normal, le tableau de bord ou l'ordinateur produisent un signal de mise en marche du système d'essuyage, et le dispositif de commande de l'invention, par son moyen pour produire un signal représentatif de la position du balai, produit à chaque instant un signal informant le contrôleur 20 du fait qu'il entre ou non dans l'une ou l'autre des deux zones de test de fin de course ZdT1 ou ZdT2.

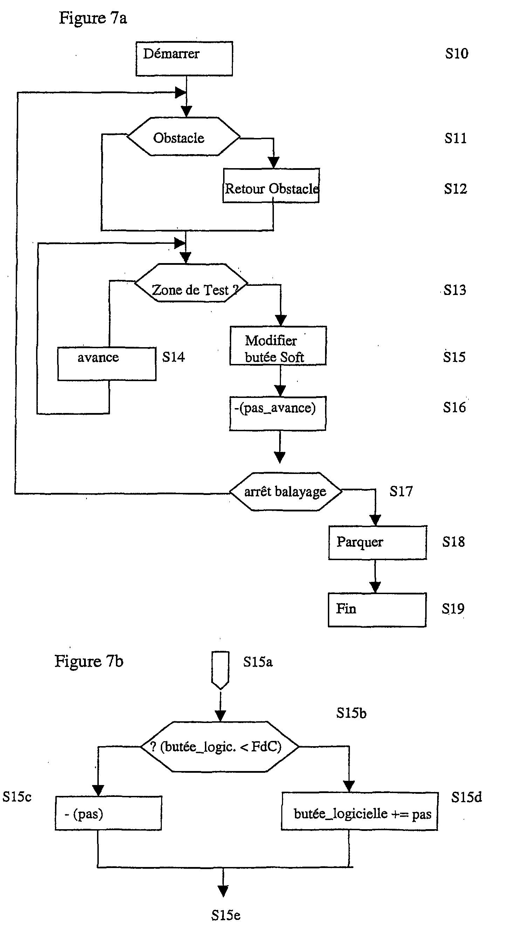

A l'aide de l'organigramme de la figure 7A et des dessins des figures 2A à 2E, on va maintenant décrire le fonctionnement normal du dispositif de commande de l'invention.

Aux figures 2A à 2E, les éléments de l'invention ayant la même fonction que ceux des figures 1A à 1D, portent les mêmes numéros de référence.

Lors de la réception d'un ordre de mise du système d'essuyage reçu par le contrôleur du dispositif de l'invention lors d'une étape S10 (figure 7A), le contrôleur de l'invention détermine le sens de parcours du balayage en fonction de l'état antérieur de ce dernier.

Lors d'une étape S11, on réalise la détection d'un obstacle sur la trajectoire ou course C (aux figures 2A à 2^{E}) du balai d'essuyage dans son parcours sur la vitre.

A la figure 2A, le trajet du balai s'effectue entre une position A, par exemple initiale, dans une première situation par rapport à la première zone de test de fin de course (ZdT1), entre les positions 1 et 11, jusqu'à une position B elle-même dans une seconde situation par rapport à la seconde zone de fin de course (ZdT2), entre les positions 7 et 4.

Les points A et B de fin de course logicielle sont établis par le contrôleur 20 du dispositif de commande de l'invention, et leurs situations par rapport respectivement aux première ou seconde zones de fin de course (ZdT1 ou ZdT2) sont variées au moins lors de certains balayages ou lors de tous les balayages en fonctionnement normal.

A cette fin, dans le cas où aucun obstacle n'a été rencontré ou dans le cas où, lors d'une étape S12, le cas d'un obstacle rencontré a été traité, le contrôleur de l'invention réalise la détection de la situation dans laquelle le balai d'essuyage entre dans une zone de test de fin de course (ZdT1 ou ZdT2).

Tant que le test S13 (figure 7A) n'est pas positif, le contrôleur 20 (figure 3) produit, lors d'une étape 14 (figure 7A) un signal d'avance du dispositif d'essuyage selon le sens de balayage en cours.

Quand le test S13 de détection de zone de test de fin de course est positif, le contrôleur 20 (figure 3) exécute, lors d'une étape S15, une opération de modification de butée de fin de course logicielle dans chacune des première et seconde zones de fin de course ZdT1 ou ZdT2.

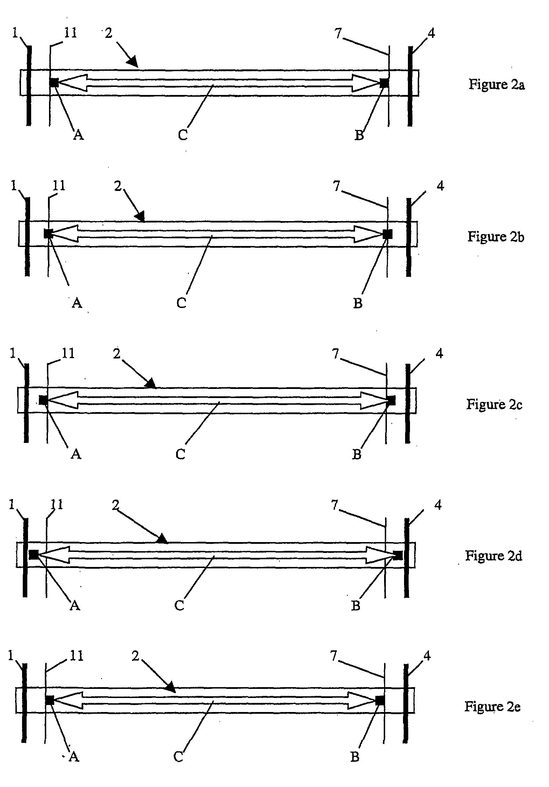

A la figure 2B relative au second trajet de balayage, on note que les situations extrêmes A et B se trouvent à l'intérieur de la zone de test de sorte que la longueur du trajet C augmente.

Aux figures 2C et 2D correspondant aux troisième et quatrième balayages, la situation de chaque butée de fin de course logicielle est déplacée de sorte que la longueur de la trajectoire du trajet C mesurée entre deux butées de fin de course logicielle augmente.

Le procédé de commande exécuté lors d'une étape S15 de modification de la situation de la butée logicielle est répété tant que la position instantanée relative du balai d'essuyage ne se trouve pas en concordance avec une butée de fin de course physique à gauche 1 ou à droite 4.

A la figure 7B, on a représenté le détail de l'opération S15. L'opération S15 démarre au point S15a de la figure 7B. Du point d'entrée S15a de l'opération de modification de la situation de la butée logicielle, on effectue lors d'un test S15b le test pour déterminer si la situation de la butée logicielle a atteint celle de la butée de fin de course physique.

Tant que la butée logicielle n'a pas atteint la butée de fin de course physique 1 ou 4, la situation de la butée logicielle dans la zone de test ZdT1 ou ZdT2, est incrémentée d'un pas déterminé de sorte que la course du balai s'incrémente.

Si la butée de fin de course logicielle a atteint la butée de fin de course physique, le pas d'incrément de la position de la butée logicielle est changé de signe.

A la fin des opérations S15c ou S15d, le contrôle est rendu à la suite de l'organigramme S16.

En revenant à la figure 7A, après la modification de la situation de la butée de fin de course logicielle aussi bien dans la première (Zdt1) que la seconde (ZdT2) zone de test de fin de course, le contrôleur 20 (figure 3) commande pour le moteur d'essuyage un changement de sens du trajet par exemple en changeant le signe de l'incrément (pas_avance) lors d'une étape S16.

Le paramètre (pas_avance) est utilisé par le contrôleur 20 (figure 3) lors de l'étape S14 qui réalise la commande de l'avance du balai sur sa trajectoire C. On note que toute loi d'avance convenable peut être envisagée, notamment en fonction de la géométrie de la vitre 15 (figure 3), de son état physique (mouillage, salissure, ...), ou de commandes particulières issues de l'organe de commande 16 (figure 3).

On remarque à la figure 2E que l'amplitude de balayage de la trajectoire C se réduit dans les balayages qui suivent celui de la figure 2D, au cours duquel les butées de fin de course physique ont été atteintes par les butées logicielles.

On remarque que dans la situation des figures 2A à 2E, le comportement du système d'essuyage selon l'invention est considéré comme symétrique.

Or, l'un des mérites de l'invention est de permettre que, à cause de l'usure des pièces mécaniques, à cause de l'état non homogène sur toute la trajectoire de la vitre essuyée et enfin à cause de jeux qui se modifient dans le mécanisme d'essuyage, les positions des butées de fin de course logicielle peuvent changer, sans que le système d'essuyage en soit affecté.

Dans une telle situation réelle, les positions absolues des butées de fin de course logicielle dans chacune des zones de test de fin de course gauche et droite ne sont pas symétriques.

C'est un mérite de l'invention de permettre de fonctionner de manière convenable même dans une telle situation.

Pour éviter un fonctionnement dégradé du système d'essuyage, l'amplitude des zones de test de fin de course est déterminée pour ne pas entraîner de gène dans l'essuyage, par exemple en déterminant l'amplitude. pour l'essuyage d'une vitre d'un véhicule automobile classique de l'ordre de 10 mm.

L'organigramme de la figure 7A se poursuit par une étape 17 de détection d'arrêt du balayage produit par un ordre de l'utilisateur ou de l'ordinateur de bord, auquel cas, lors d'une étape S18, le contrôleur de l'invention réalise une mise au parking du balai d'essuyage et exécute une étape de fin.

Tant que le balayage n'est pas arrêté, le balai d'essuyage poursuit son trajet.

Dans un autre mode de réalisation du procédé de commande de l'invention, la variation de la position de la butée logicielle dans chaque zone de test à gauche ZdT1 1, 11 ou droite ZdT2 7, 4, n'est pas modifiée à chaque balayage, mais à la fin de certains d'entre eux. Dans un mode de réalisation non représenté aux dessins, le contrôleur de l'invention comporte un compteur des passages dans une zone de test lors du fonctionnement normal. Quand le compteur atteint une valeur prédéterminée, le contrôleur le remet à l'état initial et force le générateur de loi de mouvement de balai d'essuyage de sorte qu'au lieu d'arrêter le balayage en cours à la position de la butée logicielle, le balai atteigne la butée de fin de course physique correspondante. Si, le contrôleur détecte que la position relative de la butée logicielle à la butée de fin de course physique de la zone de test considérée a changé, le contrôleur de l'invention recharge une nouvelle valeur de position relative de la butée logicielle à la butée de fin de course physique. Dans une variante préférée, cette position de repositionnement de la butée logicielle se fait toujours à une même distance de la butée de fin de course physique, par exemple, dix millimètres.

Aux figures 4A à 4C, on a représenté une première situation d'obstacle rencontré lors du trajet alternatif du balai d'essuyage.

A la figure 4A, le balai d'essuyage 15 (figure 3), parti d'une position 30 de la première zone de test de fin de course ZdT1 entre les repères 1 et 11, suit par un trajet 31 le trajet d'essuyage habituel sur la piste 2.

Il rencontre alors un obstacle 32 disposé sur son trajet et le contrôleur 20 (figure 30) produit, par un moyen qui sera décrit plus loin, un signal représentatif de la détection d'un obstacle disposé sur le trajet d'essuyage.

A la détection de ce signal, lors de l'étape S11 de la figure 7A, le contrôleur de l'invention produit un signal d'inversion de sens de balayage de sorte que le balai, arrêté en position 33 contre l'obstacle 32 (figure 4b), effectue un trajet de retour 34.

Dans une première stratégie, le contrôleur de l'invention commande un déplacement du balai d'essuyage jusqu'à une position d'attente 35 disposée à une distance prédéterminée, par exemple d'une amplitude égale à l'amplitude de l'une des zones de test de fin de course 1, 11 ou 7, 4.

Le contrôleur 20 (figure 3) impose un temps d'arrêt puis, de la position 36 (figure 4C) le balai d'essuyage reçoit un mouvement pour tenter de passer la position de l'obstacle 32. Si l'obstacle 32 a disparu, le balai reprend son trajet d'essuyage normal. Par contre, si l'obstacle 32 est à nouveau rencontré, le contrôleur de l'invention qui comporte un compteur du nombre de détections de la présence d'un obstacle comme l'obstacle 32, produit un signal imposant un retour vers la zone de test de fin de course accessible quand le compteur du nombre de détections dépasse un nombre prédéterminé, par exemple cinq détections.

Dans une seconde stratégie, le contrôleur de l'invention commande un déplacement du balai d'essuyage qui suit le trajet 34 pour revenir dans l'autre zone de test de fin de course en situation de butée de fin de course logicielle 38.

Dans les deux stratégies, si le compteur de détections d'un obstacle comme l'obstacle 32 sur la vitre enregistre un nombre de détections supérieur à un nombre prédéterminé, comme dix, alors il impose le passage du contrôleur dans l'étape de fonctionnement en configuration, l'obstacle servant alors de butée de fin de course physique pour établir une zone de test intermédiaire et en signalant un fonctionnement dégradé.

Aux figures 5A et 5B, on a représenté la situation dans laquelle l'obstacle se trouve disposé dans l'une des zones de test de fin de course 1, 11 ou 7, 4.

A la figure 5A, on a représenté le cas où un obstacle 42 se trouve interposé dans la zone de test de fin de course 7, 4.

Parti de la zone de fin de course en position de butée logicielle 40, le balai d'essuyage suit le trajet 41 et rencontre l'obstacle 42 dans la seconde zone de test de fin de course à droite, limitée entre les références 7 et 4.

Le contrôleur 20 (figure 3) génère une commande d'arrêt du balayage, puis une commande de changement de sens du trajet et un retour selon le trajet 44 jusqu'à la butée de fin de course logicielle 45 dans l'autre zone de test 1,11.

Dans le cas d'un obstacle posé dans la zone de fin de test à droite ou à gauche, le contrôleur de l'invention peut réaliser un recalibrage, une réinitialisation ou une reconfiguration du système d'essuyage de l'invention pour la zone de test de fin de course à droite.

A la figure 9, on a représenté un organigramme représentant l'opération dite, à la figure 7A, "retour obstacle" de l'étape S12.

Le point d'entrée de l'opération à la figure 9 est en S12a, puis le contrôleur 20 (figure 3) réalise lors d'une étape S12b un test pour déterminer si l'obstacle se trouve en cours de trajet sur la vitre ou dans l'une des première ou seconde zones de test de fin de course.

Dans le cas positif où l'obstacle se trouve en cours de trajet du balai d'essuyage, ainsi qu'on l'a expliqué à l'aide des figures 4, lors d'une étape S12e, le contrôleur génère un retour d'une distance D prédéterminée, puis un délai d'attente d'une durée prédéterminé S12g, et enfin génère un retour vers la zone de test de fin de course FdC lors de l'étape S12h. Le contrôleur rend le contrôle au point S12i.

Si le test S12b est négatif, lors d'une étape S12c, le contrôleur 20 (figure 3) produit une commande de changement de sens pour le trajet du balai d'essuyage et incrémente d'une unité une variable Tb mémorisant le nombre de balayages depuis que la variable Tb se trouvait initialement mise à zéro lors de la détection d'un obstacle dans l'une ou l'autre des première ou seconde zones de test de fin de course.

Lors d'une étape suivante S12b, le contrôleur détermine si la variable Tb mémorisant le nombre de balayages en détection d'obstacle dans une zone de test de fin de course a atteint une valeur de référence TBD dans le cas négatif le contrôleur rend le contrôleur au point S12i.

Si le nombre de balayages au cours duquel un obstacle en zone de test de fin de course a été détecté a atteint le nombre de balayages prédéterminé TBD, le contrôleur 20 (figure 3) place à nouveau la variable Tb à la valeur initiale 0 et exécute un recalibrage, au moins partiel, selon l'enseignement de l'organigramme de la figure 6.

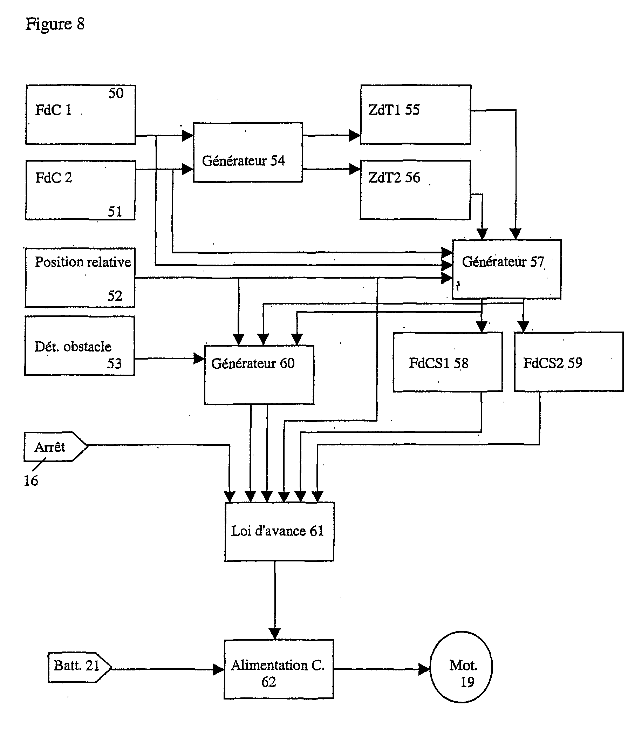

A la figure 8, on a représenté un schéma-bloc d'un contrôleur 20 mettant en oeuvre le procédé de commande de l'invention.

A la figure 3, on a représenté un dispositif d'essuyage utilisant le contrôleur de la figure 8 et on l'a déjà partiellement décrite.

Un balai d'essuyage 15, en contact avec la vitre 14, est entraîné par un dispositif 18 de conversion du mouvement de rotation du réducteur en un mouvement de balayage, linéaire ou rotatif, et alternatif dans les deux cas du balai d'essuyage.

Le dispositif 18 est connecté mécaniquement à l'arbre de sortie du réducteur 17 dont l'arbre d'entrée est lui-même connecté à l'arbre du rotor de l'induit d'un moteur à courant continu 19 alimenté à travers le contrôleur 20 par la tension continue issue d'une batterie 21.

Le contrôleur 20 reçoit par ailléurs une commande de marche-arrêt issue d'un dispositif 16 disposé sur le tableau de bord du véhicule automobile équipé ou de son ordinateur de bord, ainsi que les signaux représentatifs des fins de course physiques droite et gauche ainsi que de la position relative et de la détection d'obstacle générés par un moyen de détection convenable 22.

A la figure 8, les signaux issus du moyen de détection 22 proviennent respectivement :
- d'un moyen 50 pour générer un signal représentatif de la détection de l'accostage du balai d'essuyage sur une première butée physique FdC1,
- d'un moyen pour générer un signal représentatif de la détection de l'accostage du balai d'essuyage sur une seconde butée physique FdC2,
- d'un moyen pour générer un signal représentatif de la position relative du balai d'essuyage sur son trajet sur la vitre en essuyage, et
- d'un moyen 53 pour produire un signal de détection d'obstacle.

Les moyens 50 et 51 qui produisent des signaux représentatifs de la détection de l'accostage d'une butée de fin de course physique droite ou gauche, sont connectés aux bornes d'entrée d'un générateur 54 de configuration, qui est activé seulement lors de l'étape de configuration ou de recalibration du procédé de commande décrit ci-dessus.

Le générateur 54 produit des signaux qui permettent de configurer des moyens mémoire 55 et 56, respectivement pour enregistrer les situations relatives de première gauche ZdT1 et seconde droite ZdT2 zones de test de fin de course par rapport aux butées de. fin de course physique FdC1 et FdC2, précitées.

Les signaux issus des moyens mémoire 55 et 56 sont en permanence transmis aux bornes d'entrée d'un générateur 57 produisant une loi de variation de la situation de butées de fin de course logicielle.

Le générateur 57 reçoit aussi sur des bornes d'entrée les signaux issus des moyens 50, 51 et 52 respectivement :
- un signal représentatif de la détection de l'accostage du balai d'essuyage sur une première butée physique FdC1,
- un signal représentatif de la détection de l'accostage du balai d'essuyage sur une seconde butée physique FdC2,
- un signal représentatif de la position relative du balai d'essuyage sur son trajet sur la vitre en essuyage.

Selon le programme décrit à l'aide de l'organigramme de la figure 7A, le générateur 57 produit sur ses bornes de sortie des signaux représentatifs de la situation des butées de fin de course logicielle dans chacune des première ZdT1 et Seconde ZdT2 zones de test de fin de course, respectivement dans des mémoires 58 et 59.

Par ailleurs, les moyens 52 et 53 produisent des signaux qui représentent respectivement la position relative du balai d'essuyage par rapport aux butées de fin de course physique et un signal représentatif de détection d'un obstacle.

Le générateur 60 fonctionne selon l'organigramme décrit à l'aide de la figure 9. Le générateur 60 produit des signaux de sortie qui représentent des commandes pour un générateur 61 de loi d'avance qui reçoit aussi le signal de marche - arrêt du dispositif de commande 16 ainsi que le signal représentatif de la position relative du balai et les signaux mémoires représentatifs des butées de fin de course logicielle FdC1 et FdC2.

Le générateur 61 de loi d'avance produit un signal de pilotage adressé à un circuit de contrôle d'alimentation 62 disposé sur l'alimentation par la batterie 21 sur le moteur 19 de façon à faire fonctionner le système d'essuyage selon le procédé de commande de l'invention.

On remarque que le balayage est assuré selon les trajets indifférents qu'ils soient circulaire, le balai étant monté sur un pivot ou rectiligne, le balai étant monté sur un chariot coulissant sur un rail.

On remarque que le moyen de détection d'obstacle 53 peut être réalisé par différents moyens comprenant la détection d'une surtension ou une surintensité sur l'alimentation du moteur 19.

On remarque que le moyen 52 pour produire un signal représentatif de la position relative du balai dans son balayage peut être réalisé à l'aide d'un capteur disposé sur le moteur 19 sur son réducteur 18 ou sur un organe lié au dispositif de conversion 17.

Un autre avantage de l'invention est de permettre de ne pas avoir à concevoir un dispositif d'essuyage pour chaque modèle de véhicule puisque, à la configuration, son dispositif de commande effectue une calibration, et donc un auto-apprentissage des limites des balayages caractéristiques du véhicule.

Un autre avantage de l'invention est de permettre de ne pas nécessiter de placer les capteurs loin du dispositif de commande ou du moteur électrique pour obtenir une représentation exacte du balayage, ce qui réduit les coûts de fabrication lors du montage sur le véhicule et réduit les longueurs de câbles électriques habituels.

Un autre avantage de l'invention est de permettre de réaliser une auto-adaptation des limites du balayage au cours du temps à cause de l'usure mécanique, des jeux et d'autres accidents.

## Revendications

1. Procédé de commande d'un moteur d'essuyage équipant un dispositif d'essuyage pour entraîner au moins un balai d'essuyage se déplaçant sur une vitre selon un trajet alternatif entre une première et une seconde positions de fin de course, qui consiste:
lors d'une première étape d'initialisation (S1 - S8) ,
◆ à détecter des première et seconde butées de fin de course (FdC1, FdC2) telles que déterminées par construction du dispositif d'essuyage associé, puis
◆ à déterminer à partir de ces première et seconde butées de fin de course des première (ZdT1) et seconde (ZdT2) zones de test de fin de course et dans chacune des zones de test la position (A, B) d'une butée logicielle sur laquelle le balai change de sens de balayage en fonctionnement normal ;
lors d'une étape de fonctionnement normal :
◆ à détecter la position du balai d'essuyage relativement aux première et seconde zones de test de fin de course, pour déterminer le changement de sens du balayage et
◆ à réaliser lors d'au moins un passage du balai d'essuyage dans une zone de test une variation de la position de sa butée logicielle de fin de course,
de sorte que soit réalisée une auto-adaptation des limites de balayage au cours du temps en fonction des usures mécaniques, jeux et autres accidents.

2. Procédé selon la revendication 1, **caractérisé en ce que**, lors de l'étape de fonctionnement normal, la situation de chaque zone de test de fin de course est calculée en fonction de la détection de l'accostage de butées de fin de course physique.

3. Procédé selon la revendication 2, **caractérisé en ce qu'**une première limite de chaque zone de fin de course est déterminée sur la base de la détection de l'accostage d'une butée de fin de course et par une seconde limite disposée à une distance prédéterminée de la première limite.

4. Procédé selon l'une des revendications précédentes, **caractérisé en ce que** la variation de la position de chaque butée logicielle est effectuée par incrémentation d'un pas positif ou négatif de façon à ce que la butée logicielle reste dans sa zone de test.

5. Procédé selon la revendication 1, lors du fonctionnement normal, **caractérisé en ce qu'**il consiste aussi à détecter la présence d'un obstacle sur le trajet alternatif du balai d'essuyage en dehors d'une zone de test, lorsqu'il provient d'une zone de test de fin de course, puis à déterminer un arrêt du balayage (33).

6. Procédé selon la revendication 5, **caractérisé en ce qu'**il consiste aussi à commander un retour en arrière (34) du balai d'essuyage d'une distance prédéterminée, puis un arrêt (36) d'une durée prédéterminée, et enfin un retour vers la position (33) de l'obstacle (32), au moins un nombre prédéterminé de fois.

7. Procédé selon la revendication 5, **caractérisé en ce qu'**il consisté aussi à commander, depuis la position (33) d'arrêt de détection d'obstacle un retour en arrière (34, 37) du balai d'essuyage vers la zone de test (1, 11) de fin de course d'où le balai provient.

8. Procédé selon l'une des revendications 6 ou 7, **caractérisé en ce qu'**il consiste aussi à commander ensuite une étape d'initialisation (S1 - S8), de sorte que l'obstacle (32) disposé sur le trajet du balai d'essuyage soit considéré comme une butée de fin de course physique et à permettre un balayage en étape de fonctionnement normal selon une amplitude dégradée.

9. Procédé selon la revendication 1, lors du fonctionnement normal, **caractérisé en ce qu'**il consiste aussi à détecter la présence d'un obstacle dans une zone dé test de fin de course, puis à produire une commande d'arrêt du balayage, puis un retour en sens contraire du balayage.

10. Procédé selon la revendication 9, **caractérisé en ce qu'**il consiste aussi à incrémenter un compteur de détections d'obstacle dans une zone de test de fin de course, puis à détecter quand le compteur atteint une valeur prédéterminée, puis à exécuter à nouveau une première étape d'initialisation.

11. Contrôleur d'essuyage pour mettre en oeuvre le procédé de commande selon l'une des revendications précédentes, **caractérisé en ce qu'**il comporte :
- un moyen (54, 55) pour déterminer une zone de test de fin de course à une première extrémité du balayage dont l'entrée est connecté à un moyen (50) pour détecter l'accostage du balai d'essuyage sur une butée de fin de course physique ;
- un moyen (54, 56) pour déterminer une zone de test de fin de course à une seconde extrémité du balayage dont l'entrée est connecté à un moyen (51) pour détecter l'accostage du balai d'essuyage sur une butée de fin de course physique ;
- un moyen (57 - 59) pour déterminer la position d'une butée de fin de course dans chaque zone de fin de test ;
- un moyen (61) pour commander le mouvement d'un moteur d'essuyage ;
de sorte que le sens du balayage est inversé lors de chaque accostage d'une butée de fin de course logicielle et de sorte que la position de chaque butée logicielle soit variée à la fin d'un balayage déterminé, pour que la butée de fin de course logicielle resté à l'intérieur de sa zone de test relativement à la butée de fin de course physique associée.

12. Contrôleur selon la revendication 11, **caractérisé en ce qu'**il comporte aussi un moyen (53) pour détecter la présence d'un obstacle en dehors d'une zone de test de fin de course (ZdT1, ZdT2), dont le signal de sortie est transmis à l'entrée d'activation d'un générateur (60) qui comporte, séparément ou en combinaison : un moyen de commande d'un retour en arrière du balai d'essuyage d'une distance prédéterminée, un moyen de commande d'un retour en arrière du balai d'essuyage jusqu'à la précédente butée de fin de course logicielle, un moyen produisant un temps d'arrêt d'une durée prédéterminée, puis un retour vers la position détectée de l'obstacle, un compteur du nombre de détections d'un obstacle depuis une position d'arrêt intermédiaire (36) produisant un signal de sortie actif quand le nombre de détections dépasse une valeur prédéterminée, de sorte que le moyen de commande d'un retour en arrière du balai d'essuyage jusqu'à la précédente butée de fin de course logicielle soit activé, le compteur étant alors réinitialisé, un compteur du nombre de détections d'un obstacle depuis une zone de test de fin de course, produisant un signal de sortie actif quand le nombre de détections dépasse une valeur prédéterminée, de sorte que l'un au moins des moyens pour déterminer une zone de test de fin de course et une butée de fin de course logicielle soit activé en prenant la position de l'obstacle (32) comme butée de fin de course.

13. Contrôleur selon la revendication 11 ou 12, **caractérisé en ce qu'**il comporte aussi un moyen (53) pour détecter la présence d'un obstacle dans une zone de test de fin de course, dont le signal de sortie est transmis à l'entrée d'activation d'un générateur (60) qui commande un retour en arrière vers la zone de test de fin de course opposée.

14. Contrôleur selon la revendication 13, **caractérisé en ce qu'**il comporte aussi un moyen (60) pour compter le nombre (Tb) de balayages au cours duquel un obstacle a été rencontré, puis lorsqu'un nombre prédéterminé (Tbd) de balayages a été atteint, à recalculer la situation de la zone de test de fin de course dans laquelle un obstacle a été détecté.

15. Dispositif d'essuyage incorporant un contrôleur d'essuyage selon l'une des revendications 11 à 14, **caractérisé en ce qu'**il comporte un moteur d'essuyage (19) alimenté sous la commande d'un dispositif de commande (16) pour détecter une commande de marche/arrêt d'un utilisateur ou d'un ordinateur de bord, connecté audit contrôleur d'essuyage (20), qui reçoit aussi des signaux représentatifs des fins de course physiques droite et gauche ainsi que de la position relative et de la détection d'obstacle générés par un moyen (22) de détection en relation avec l'arbre de sortie du moteur d'essuyage (19), mécaniquement connectée à un réducteur (18) et à un dispositif (17) de conversion du mouvement de rotation de l'arbre de sortie du réducteur (18) en un mouvement de balayage appliqué à au moins un balai d'essuyage (15).

## Claims

1. A method for controlling a wiper motor equipping a wiper device for driving at least one wiper blade moving over a window on an alternating path between first and second end of travel positions, which consists of:
during a first initialisation step (S1-S8),
- detecting first and second end of travel stops (FdC1, FdC2) as determined by the construction of the associated wiper device, and then
- determining, from these first and second end of travel stops, first (ZdT1) and second (ZdT2) end of travel test areas and in each of the test areas the position (A, B) of a software stop on which the blade changes sweep direction in normal operation;
during a normal operating step:
- detecting the position of the wiper blade relative to the first and second end of travel test areas, in order to determine the change of direction of the sweep, and
- producing, during at least one passage of the wiper blade in a test area, a variation in the position of its end of travel software stop,
so that an auto-adaptation of the limits of sweep over time is produced according to mechanical wear, play and other accidents.

2. A method according to Claim 1, **characterised in that**, during the normal functioning step, the situation with each end of travel test area is calculated according to the detection of the coming up against the physical end of travel stops.

3. A method according to Claim 2, **characterised in that** a first limit ofeach end of travel area is determined on the basis of the detection of the coming up against an end of travel stop and by a second limit disposed at a predetermined distance from the first limit.

4. A method according to one of the preceding claims, **characterised in that** the variation in the position of each software stop is effected by incrementation by a positive or negative step so that the software stop remains in its test area.

5. A method according to Claim 1, during normal operation, **characterised in that** it also consists in detecting the presence of an obstacle on the alternating path of the wiper blade outside a test area, when it comes from an end of travel test area, and then determining a stoppage of the sweeping (33).

6. A method according to Claim 5, **characterised in that** it also consists in demanding a backward return (34) of the wiper blade by a predetermined distance, and then a stoppage (36) for a predetermined duration, and finally a return to the position (33) of the obstacle (32), at least a predetermined number of times.

7. A method according to Claim 5, **characterised in that** it also consists in demanding, from the stoppage position (33) of detection of an obstacle, a backward return (34, 37) of the wiper blade to the end of travel test area (1, 11) from where the blade comes.

8. A method according to one of Claims 6 or 7, **characterised in that** it also consists in next demanding an initialisation step (S1-S8), so that the obstacle (32) disposed on the path of the wiper blade is considered to be a physical end of travel stop and to allow a sweeping in a normal operating step according to a degraded amplitude.

9. A method according to Claim 1, during normal operation, **characterised in that** it also consists in detecting the presence of an obstacle in an end of travel test area, and then producing a command to stop the sweeping, and then a return in the opposite direction of the sweeping.

10. A method according to Claim 9, **characterised in that** it also consists in incrementing a counter of obstacle detections in an end of travel test area, and then detecting when the counter reaches a predetermined value, and then once again executing a first initialisation step.

11. A wiping controller for implementing the control method according to one of the preceding claims, **characterised in that** it comprises:
- a means (54, 55) for determining an end of travel test area at a first end of the sweep whose input is connected to a means (50) for detecting when the wiper blade comes up against a physical end of travel stop;
- a means (54, 56) for determining an end of travel test area at a second end of the sweep whose input is connected to a means (51) of detecting when the wiper blade comes up against a physical end of travel stop;
- a means (57-59) for determining the position of an end of travel stop in each end of test area;
- a means (61) for controlling the movement of a wiper motor;
so that the direction of sweep is reversed each time a software end of travel stop is come up against and so that the position of each software stop is varied, at the end of a given sweep, so that the software end of travel stop remains within its test area relative to the associated physical end of travel stop.

12. A controller according to Claim 11, **characterised in that** it also comprises a means (53) for detecting the presence of an obstacle outside an end of travel test area (ZdT1, ZdT2), whose output signal is transmitted to the input activating a generator (60) which comprises, separately or in combination: ameans of demanding a backward return of the wiper blade by a predetermined distance, a means of demanding a backward return of the wiper blade as far as the previous software end of travel stop, a means producing a stoppage time of a predetermined duration, and then a return to the detected position of the obstacle, a counter counting the number of detections of an obstacle from an intermediate stop position (36) producing an active output signal when the number of detections exceeds a predetermined value, so that the means of demanding a backward return of the wiper blade as far as the previous software end of travel stop is activated, the counter then being reinitialised, a counter for the number of detections of an obstacle from an end of travel test area, producing an active output signal when the number of detections exceeds a predetermined value, so that at least one of the means for determining an end of travel test area and a software end of travel stop is activated, taking the position of the obstade (32) as the end of travel stop.

13. A controller according to Claim 11 or 12, **characterised in that** it also comprises a means (53) for detecting the presence of an obstacle in an end of travel test area, whose output signal is transmitted to the activation input of a generator (60) which demands a backward return to the opposite end of travel test area.

14. A controller according to Claim 13, **characterised in that** it also comprises a means (60) for counting the number (Tb) of sweeps during which an obstacle has been encountered, and then, when a predetermined number (Tbd) of sweeps has been reached, recalculating the situation of the end of travel test area in which an obstacle has been detected.

15. A wiper device incorporating a wiping controller according to one of Claims 11 to 14, **characterised in that** it comprises a wiper motor (19) supplied under the control of a control device (16) for detecting a stop/start command of a user or of an on-board computer, connected to the said wiping controller (20), which also receives signals representing right and left physical ends of travel as well as the relative position and the obstacle detection generated by a detection means (22) in relationship with the output shaft of the wiper motor (19), mechanically connected to a gearbox (18) and to a device (17) for converting the rotation movement of the output shaft of the gearbox (18) into a sweeping movement applied to at least one wiper blade (15).

## Patentansprüche

1. Steuerverfahren eines eine Wischvorrichtung ausrüstenden Wischmotors vor, um mindestens ein Wischblatt anzutreiben, das sich auf einer Scheibe gemäß einem Weg zwischen einer ersten und einer zweiten Endposition hin- und herbewegt. Das Steuerverfahren ist **dadurch gekennzeichnet, dass** es darin besteht:
bei einem ersten Initialisierungsschritt (S1 - S8):
- den ersten und zweiten Endanschlag (FdC1, FdC2) zu erfassen, die durch die Konstruktion der Wischvorrichtung festgelegt wurden, dann
- ab diesem ersten und zweiten Endanschlag einen ersten (ZdT1) und einen zweiten Test-Endbereich (ZdT2) und in jedem dieser Testbereiche die Position (A, B) eines Software-Anschlags festzulegen, an dem das Blatt im Normalbetrieb seine Wischrichtung wechselt;
bei einem normalen Betriebsschritt:
- die Position des Wischblattes in Bezug auf den ersten und zweiten Test-Endbereich zu erfassen, um den Wechsel der Wischrichtung festzulegen, und
- bei mindestens einem Durchlauf des Wischblattes durch einen Testbereich eine Änderung der Position seines Software-Endanschlags vorzunehmen,
so dass eine Selbstanpassung der Wischgrenzen im Laufe der Zeit je nach mechanischem Verschleiß, Spielen oder anderen Unfällen stattfindet.

2. Verfahren nach Anspruch 1, **dadurch gekennzeichnet, dass** bei dem normalen Betriebsschritt die Lage jedes Test-Endbereichs je nach Erfassung der physischen Anlage der Endanschläge berechnet wird.

3. Verfahren nach Anspruch 2, **dadurch gekennzeichnet, dass** eine erste Grenze jedes Endbereichs auf der Basis der Erfassung der Anlage eines Endanschlags und durch eine zweite Grenze festgelegt wird, die in einem vorbestimmten Abstand zur ersten Grenze angeordnet ist.

4. Verfahren nach einem der vorherigen Ansprüche, **dadurch gekennzeichnet, dass** die Positionsänderung jedes Software-Anschlags durch Inkrementierung um einen positiven oder negativen Schritt erfolgt, so dass der Software-Anschlag in seinem Testbereich bleibt.

5. Verfahren nach Anspruch 1, **dadurch gekennzeichnet, dass** es im Normalbetrieb ebenfalls darin besteht, das Vorhandensein eines Hindernisses auf dem abwechselnden Weg des Wischblattes außerhalb eines Testbereichs zu erfassen, wenn es aus einem Test-Endbereich kommt, und dann ein Anhalten des Wischens (33) festzulegen.

6. Verfahren nach Anspruch 5, **dadurch gekennzeichnet, dass** es im Normalbetrieb ebenfalls darin besteht, einen Rücklauf (34) des Wischblattes über einen vorgegebenen Abstand und dann ein Anhalten (36) einer vorgegebenen Dauer und schließlich einen Rücklauf zur Position (33) des Hindernisses (32) mindestens eine vorgegebene Anzahl von Malen zu befehlen.

7. Verfahren nach Anspruch 5, **dadurch gekennzeichnet, dass** es im Normalbetrieb ebenfalls darin besteht, ab der Haltposition (33) zur Erfassung des Hindernisses einen Rücklauf (34, 37) des Wischerblatts zum Test-Endbereich (1, 11), aus dem das Blatt kommt, zu befehlen.

8. Verfahren nach einem der Ansprüche 6 oder 7, **dadurch gekennzeichnet, dass** es ebenfalls darin besteht, im Normalbetrieb dann einen Initialisierungsschritt (S1 - S8) zu befehlen, so dass das sich auf dem Weg des Wischblattes befindliche Hindernis (32) wie ein physischer Endanschlag betrachtet wird, und während des normalen Betriebsschritts ein Wischen über eine abgestufte Weite zu ermöglichen.

9. Verfahren nach Anspruch 1, **dadurch gekennzeichnet, dass** es im Normalbetrieb ebenfalls darin besteht, das Vorhandensein eines Hindernisses in dem Test-Endbereich zu erfassen, dann einen Anhaltebefehl des Wischens und schließlich einen Rücklauf in die entgegen gesetzte Wischrichtung zu bewirken.

10. Verfahren nach Anspruch 9, **dadurch gekennzeichnet, dass** es ebenfalls darin besteht, einen Hindernis-Erfassungszähler in einem Test-Endbereich zu inkrementieren, dann zu erfassen, wann der Zähler einen vorgegebenen Wert erreicht, und schließlich erneut einen ersten Initialisierungsschritt durchzuführen.

11. Wischsteuergerät für die Umsetzung des Steuerverfahrens nach einem der vorangehenden Ansprüche, **dadurch gekennzeichnet, dass** es umfasst:
- ein Mittel (54, 55) zur Bestimmung eines Test-Endbereichs an einem ersten Wischende, dessen Eingang an ein Mittel (50) zur Erfassung der Anlage des Wischblattes an einem physischen Endanschlag angeschlossen ist;
- ein Mittel (54, 56) zur Bestimmung eines Test-Endbereichs an einem zweiten Wischende, dessen Eingang an ein Mittel (51) zur Erfassung der Anlage des Wischblattes an einem physischen Endanschlag angeschlossen ist;
- ein Mittel (57 - 59) zur Bestimmung der Position eines Endanschlags in jedem Test-Endbereich;
- ein Mittel (61) zur Steuerung der Bewegung eines Wischmotors;
so dass die Wischrichtung bei jeder Anlage eines Software-Endanschlags gewechselt wird, und dass die Position jedes Software-Endanschlags am Ende einer vorgegebenen Wischbewegung geändert wird, damit der Software-Endanschlag innerhalb seines Testbereichs in Bezug auf den zugeordneten physischen Endanschlag bleibt.

12. Steuergerät nach Anspruch 11, **dadurch gekennzeichnet, dass** es ebenfalls ein Mittel (53) umfasst zur Erfassung des Vorhandenseins eines Hindernisses außerhalb eines Test-Endbereichs (ZdT1, ZdT2), dessen Ausgangssignal an den Aktivierungseingang eines Generators (60) übertragen wird, der getrennt oder in Kombination umfasst: ein Steuermittel eines Rücklaufs des Wischblattes um einen vorgegebenen Abstand, ein Steuermittel eines Rücklaufs des Wischblattes bis zum vorherigen Software-Endanschlag, ein Mittel, das eine Haltzeit einer vorgegebenen Dauer und dann eine Rückkehr zur erfassten Position des Hindernisses bewirkt, einen Zähler der Anzahl der Erfassungen eines Hindernisses ab einer Zwischen-Haltposition (36), der ein aktives Ausgangssignal erzeugt, wenn die Anzahl der Erfassungen einen vorgegebenen Wert überschreitet, so dass das Steuermittel eines Rücklaufs des Wischblattes bis zum vorherigen Software-Endanschlag aktiviert wird, wobei der Zähler dann neu initialisiert wird, einen Zähler der Anzahl der Erfassungen eines Hindernisses ab einem Test-Endbereich, der ein aktives Ausgangssignal erzeugt, wenn die Anzahl der Erfassungen einen vorgegebenen Wert überschreitet, so dass zumindest eines der Mittel zur Erfassung eines Test-Endbereichs und ein Software-Endanschlag aktiviert werden, indem die Position des Hindernisses (32) als Endanschlag betrachtet wird.

13. Steuergerät nach Anspruch 11 oder 12, **dadurch gekennzeichnet, dass** es ebenfalls ein Mittel (53) zur Erfassung des Vorhandenseins eines Hindernisses in dem Test-Endbereich umfasst, dessen Ausgangssignal an den Aktivierungseingang eines Generators (60) übertragen wird, der einen Rücklauf zum entgegen gesetzten Test-Endbereich befiehlt.

14. Steuergerät nach Anspruch 13, **dadurch gekennzeichnet, dass** es ebenfalls ein Mittel (60) zum Zählen der Anzahl der Wischbewegungen (Tb) umfasst, bei denen ein Hindernis angetroffen wurde, dann, wenn eine vorgegebene Anzahl Wischbewegungen (Tdb) erreicht ist, zur erneuten Berechnung der Lage des Test-Endbereichs, in dem ein Hindernis erfasst wurde.

15. Wischvorrichtung, die ein Wischsteuergerät nach einem der Ansprüche 11 bis 14 beinhaltet, **dadurch gekennzeichnet, dass** sie einen über eine Steuervorrichtung (16) versorgten Wischmotor (19) umfasst, um einen Ein-/Aus-Befehl eines Benutzers oder eines Bordcomputers zu erfassen, der an das besagte Steuergerät (20) angeschlossen ist, der ebenfalls Signale erhält, die repräsentativ sind für den rechten und den linken physischen Endanschlag sowie für die relative Position und die Hinderniserfassung, und die von einem Erfassungsmittel (22) in Verbindung mit der Ausgangswelle des Wischmotors (19) erzeugt werden, die mechanisch an ein Getriebe (18) und an eine Vorrichtung (17) angeschlossen ist, die die Drehbewegung der Ausgangswelle des Getriebes (18) in eine Wischbewegung umwandelt, mit der mindestens ein Wischblatt (15) beaufschlagt wird.
